# EUROPÄISCHE PATENTSCHRIFT

(11) **EP 0 637 506 B1**
(45) Veröffentlichungstag und Bekanntmachung des Hinweises auf die Patenterteilung: **29.12.1997**
(21) Anmeldenummer: 94106792.8
(22) Anmeldetag: 30.04.1994
(51) Int. Cl.: B29D 30/54, B29C 47/32

(54) **Runderneuerungsvorrichtung**
Tyre retreading apparatus
Dispositif de rechapage de pneus

(30) Priorität: 05.08.1993 DE 4326370
(43) Veröffentlichungstag der Anmeldung: 08.02.1995
(73) Patentinhaber: A-Z Formen und Maschinenbau GmbH, D-80992 München (DE)
(72) Erfinder: Meyer, Paul, B. Sc., CH-6612 Ascona (CH)
(74) Vertreter: Baronetzky, Klaus, Dipl.-Ing.

(56) Entgegenhaltungen:
- EP-A- 0 005 077
- EP-A- 0 528 683
- DE-A- 4 203 027
- FR-A- 2 359 700
- US-A- 5 162 070

## Beschreibung

Die Erfindung betrifft eine Runderneuerungsvorrichtung gemäß dem Oberbegriff von Anspruch 1 sowie ein Verfahren zur Runderneuerung, gemäß dem Oberbegriff von Anspruch 12. Eine solche Vorrichtung und ein solches Verfahren sind aus der Druckschrift EP-A-0 528 683 bekannt.

Das Runderneuern von Reifen wird derzeit auf zwei verschiedene Weisen durchgeführt:
A. Form-Vulkanisieren, wobei die Karkasse mit einem Laufstreifen aus unvulkanisierem Gummi mit einer der Karkasse zugewandten Bindegummischicht vorbereitet und dann vulkanisiert wird. Hierbei wird das Reifenprofil in den Laufstreifen eingedrückt und die Verbindung mit der Karkasse durch das Andrücken und die Wärme in einer Form sichergestellt, wobei die Form lediglich einen Reifen zur gleichen Zeit aufnimmt. Die Arbeitstemperatur liegt bei etwa 150 °C. Dieses Verfahren ist kapitalintensiv.
B. Runderneuern mittels Vorvulkanisieren, wobei ein bereits in einer flachen oder Ringform vulkanisierter und mit einem Profil versehender Laufstreifen mit einer Größe, die bereits zu der Karkasse paßt, mittels einer dünnen Schicht von zuvor unvulkanisiertem Bindegummi angeschweißt wird. Dies wird bei einer wesentlich geringeren Temperatur (zwischen 95 °C und 120 °C) und einem geringeren Druck in einem Autoklav durchgeführt, in welchem üblicherweise eine Mehrzahl von Reifen zur gleichen Zeit behandelt werden können. Dieses Verfahren ist erheblich weniger kapitalintensiv.

Beide Verfahren erfordern die Vorbereitung der Karkasse, die Entfernung des abgefahrenen Laufstreifens und ein Abschälen/Abrauhen zur Erzeugung eine gleichmäßigen Oberfläche, die in einer Ebene parallel zur Achse des Reifens gekrümmt ist (der sogenannte "Rauhradius" und die "Rauhkontur"). Hierbei entsteht ein vorbestimmter Grad der Rauhigkeit, um das Anschweissen des neuen Laufstreifens zu ermöglichen.

Besonders bei der Runderneuerung von Lastwagenreifen, die je erheblich größere Werte als Personenwagenreifen darstellen, erfolgt ein getrenntes Ausbessern einzelner örtlicher Schäden, die sich in der Karkassenoberfläche zeigen. Dies wird durch ein Ausschleifen durchgeführt, um eine aufgerauhte und unzerklüftete Oberfläche bereitzustellen. Danach werden die Löcher mit erwärmten Reparaturmaterial, das ebenfalls meist Bindegummi ist, ausgefüllt. Dies wird häufig mit kleinen Extrudern in der Größe von Handwerkzeugen durchgeführt, ist jedoch arbeitsintensiv und erfordert viel Sorgfalt und Aufmerksamkeit.

Besonders bei dem Runderneuern mit Vorvulkanisieren wurde das Bindemittel - historisch bedingt - durch Kalandern als breite Platte erzeugt, wobei die Arbeitstemperaturen nicht mehr als 80 °C betrugen. Das Bindegummi wurde gekühlt und mit Kunststoff-Zwischenschichten aufgerollt, wobei es später in die an unterschiedliche Reifengrößen angepaßten Breiten geschnitten wurde, und als ein Teil des arbeitsintensiven Verfahrens des "Aufbauens" eines vorvulkanisierten Reifens aufgebracht.

Der Grund für dieses Verfahren ist, daß bei einer Zusammensetzung dieses Bindegummis, um eine vernünftige Zeitdauer für die Vulkanisierung im Autoklav zu schaffen, dieses Gummi bei der Lagerung altert. D.h., das Bindegummi beginnt bereits mit der Vulkanisierung, so daß es später seine Anschweissfunktion nicht oder nur unvollständig ausüben kann. Zugleich ist es gefährdet, bei der Extrusion "anzuspringen", wenn die Extrusion nicht unter sehr genau überwachten Bedingungen stattfindet - insbesondere, wenn die extrudierte Platte so dünn wie oder dünner als die kalandrierte Platte sein muß.

Dies erfordert Düsenmundstücke der Breite einer Karkasse, also etwa zwischen 140 mm und 350 mm, jedoch mit einer Düsenöffnung von weniger als 1,2 mm oder 1 mm Stärke des Bindegummis, und, - in Abhängigkeit von dem Quellfaktor - erheblich weniger, bis herunter zu 0,4 mm. Hierdurch wird bei der Extrusion ein hoher Gegendruck erzeugt und es ist praktisch unmöglich, die Extrusionstemperaturen in dem Bereich zu halten, der von den Gummiherstellern als sicher angesehen wird - nämlich der, der bei dem Kalandern verwendet wird, - wobei ein Übersteigen der Temperatur um 6 bis 15 ° bereits je nach Verbindung als kritisch angesehen wird.

Nachdem die Garantie für das sichere Anschweissen in der Verantwortlichkeit der Gummihersteller steht, hat eine Extrudiervorrichtung für das direkte Aufbringen von Bindegummi auf die Karkasse in der Hand des einzelnen Runderneuerers keine Zustimmung der Gummihersteller gefunden.

Dementsprechend war, obwohl das direkte Aufbringen von Bindegummi mittels Extruder auf dem Markt seit einigen Jahren verfügbar ist und auch einige wenige Runderneuerer dieses Verfahren anwenden, eine breite Anwendung dieser Technologie nicht zu verzeichnen.

Ferner wurde aus Sicherheitsgründen für die Konfektionshaftung, d.h., für das Kleben vor der Vulkanisierung, das historische Verfahren der Industrie, bei welchem die präparierte Karkassenoberfläche mit einer Gummilösung besprüht wird, auch von diesen wenigen Runderneuerer beibehalten.

Eine derartige Gummilösung enthält jedoch flüchtige Bestandteile, die gesundheitsschädlich sind. Daher ist in einigen Gebieten Kaliforniens und in einem deutschen Bundesland das Versprühen derartiger Gummilösung verboten, und die Runderneuerer müssen dieses Verfahren aussetzen. Die Verbote werden weltweit voraussichtlich zunehmen.

Aus dem US-Patent 5 162 070 des vorliegenden Anmelders ist ein Bindegummiextruder für die direkte Extrusion auf eine sich drehende Reifenkarkasse bekannt. Bei diesem wird die Bindegummischicht grundsätzlich in der Dicke exakt bemessen aufgebracht (1,2 mm oder weniger), und auf die Karkasse mit einer sanften elastischen Kraft aufgebracht, wobei der Radius des Düsenmundstücks in der horizontalen Ebene dem größten Rauhradius entspricht, der in der Praxis auftritt. Außerhalb des mehr oder weniger breiten Bandes dieses aufgebrachten Druckes schrupft das extrudierte Bindegummi, das sehr schnell abkühlt, auf die äußeren Bereiche auf und bewirkt eine gute Haftung ohne Lufteinschlüsse.

Dieses Prinzip funktioniert auch, wenn bei vorvulkanisierten Laufstreifen, die dünne "Wings" oder Seitenflanken aufweisen, das Bindegummi 20 mm oder 30 mm seitlich der Karkasse heruntergezogen werden muß. Die Extrusionsgeschwindigkeiten werden für die Breiteneinstellung, die durch mechanisch bewegte Seitenplatten durchgeführt wird, geändert, sowie für das Beeinflussen der Stärke der aufgebrachten Bindegummischicht, wobei innerhalb von Grenzen auch die Einstellung der Karkassendrehgeschwindigkeit dienen kann. Die Einstellungen können miteinander verbunden werden und durch eine Steuereinheit vorprogrammiert werden.

Die EP-A1-0 528 683 zeigt eine ähnliche Vorrichtung mit einer anderen Art der Einstellung der Extrusionsbreite auf die Karkassenbreite, nämlich die Drehung des Extrusionskopfes um seine Längsachse aus der horizontalen Ebene heraus, in welcher er sich für die größte Breite der Karkassenoberfläche befindet.

Um eine Übereinstimmung der Karkassenoberfläche mit dem Radius des Formstücks in allen Winkelpositionen sicherzustellen, ist das Düsenmundstück mit einer Distanzlippe versehen, die an dem Gehäuse in einer Stellung anliegt, die durch die Drehung der Karkasse stromauf des extrudierten Bindegummis zu liegen kommt. Die andere Lippe, in einem ebenen kleinen Abstand von der Karkassenoberfläche, formt die Außenseite der Bindegummischicht.

Die DE-A1-40 25 459 offenbart das spiralige Aufwickeln eines dünnen und schmalen Streifen extrudierten Bindegummis auf eine Karkasse. Die spiralig aufgewickelten Streifen überlappen einander, was Lufteinschlüsse nicht sicher verhindert. Diese Druckschrift entspricht insofern dem wohlbekannten Verfahren des Streifenwickelns für das Aufbauen von Laufstreifen für das Vulkanisieren in einer Form, wie es beispielsweise aus der DE-PS 17 29 555 bekannt ist.

Alle diese bekannten Verfahren arbeiten mit Bindegummiextrudern mit kleinen Düsenmundstückschlitzen, d.h., mit hohem Gegendruck, der in dem Düsenmundstück erzeugt wird, und daher in einem Extrusionstemperaturbereich, der die Arbeitstemperatur des historischen Kalanderns für die Bindegummifolie übersteigt. Auch kann keines dieser Verfahren Löcher ausfüllen.

Die FR-A-23 59 700 betrifft das Ausfüllen von Löchern und Fehlstellen von ungerauhten abgefahrenen Reifen. Hierbei wird ein Laufstreifen für das Runderneuern durch Vulkanisieren in einer Form aufgebracht.

Um dies zu erreichen, wird ein Extrusionsspritzkopf mit austauschbaren Düsenmundstücken versehen, die an die gewünschte Krümmung des Reifens angepaßt sind. Das Düsenmundstück wird der Karkassenoberfläche angenähert, liegt jedoch nicht an dieser an und ist in einem festen Abstand von der Karkassenoberfläche, auf welchen Gummi von dem Extruder aufzubringen ist. Die Laufstreifenschicht wird dann aus einer Ansammlung von Gummi ausgeformt, die zwischen dem Düsenauslaß und der Karkasse durch Drehung der Karkasse gegen die stromab liegende Mitte des Düsenmundstücks ausgebildet wird, wobei sich die Düsenöffnung zwischen der Karkasse und der stromab liegenden gekrümmten Düsenoberfläche einstellt. Der radiale Abstand zwischen diesen legt die Stärke des auf die Karkasse aufgebrachten Laufstreifens fest.

Derartige Vorrichtungen sind beim Formvulkanisier-Runderneuern verwendet worden, obwohl sie bislang - soweit bekannt - lediglich bei normal vorbereiteten und gerauhten Karkassen eingesetzt wurden und dort im begrenzten Maße für das Ausfüllen von Löchern dienten.

Ein Grund hierfür ist, daß das die Löcher ausfüllende Material Laufstreifengummi ist, das für hohe Laufleistung und Straßenhaftung konzipiert ist, und nicht das weiche und klebrige Bindegummi, das normalerweise verwendet wird. Ein wichtigerer Grund ist, daß der durch den Extruder erzeugte Druck, der auf den Überschuß von weichem Gummi drückt, sich frei ausdehnen kann und nicht ausreicht, in mehr als lediglich flache Löcher einzudringen, die jedoch sorgfältig geformt werden müssen, um einen leichten Gummifluß zu ermöglichen. In der Praxis bedeutet dies, daß der Bedienmann für das Löcherausfüllen beurteilen muß, welchen Löcher in üblicher Weise auszufüllen sind, und welche durch das Gerät ausgefüllt werden können. Dies läßt einen Unsicherheitsfaktor bei der Qualitätskontrolle einfließen, der von vielen Runderneuerern als nicht akzeptabel angesehen wird.

Bei diesem Verfahren ist zudem das Anschließen zwischen dem Anfang und dem Ende der Extrusion nach einer vollen Drehung der Karkassen ein Problen und diese Verbindung oder der sogenannte "Stoß" erfordern im allgemeinen einen zusätzlichen Arbeitsschritt, nämlich das Abschneiden von Überschußgummi und somit eine mögliche Verschwendung.

Nachteilig ist auch, daß die Stärke des Laufstreifens stark schwankt, wenn die Karkasse nicht exakt zentrisch ist.

Demgegenüber liegt der Erfindung die Aufgabe zugrunde, eine Runderneuerungsvorrichtung gemäß dem Oberbegriff von Anspruch 1 sowie ein Verfahren für das Runderneuern gemäß dem Oberbegriff von Anspruch 12 zu schaffen, bei welchem die Sicherheit bei der Herstellung von runderneuerten Reifen erhöht ist, bei beträchtlicher Reduktion von Arbeits- und Kostenaufwand.

Diese Aufgabe wird erfindungsgemäß durch Anspruch 1 bzw. 12 gelöst. Vorteilhafte Weiterbildungen ergeben sich aus den Unteransprüchen.

Überraschenderweise läßt sich mit der erfindungsgemäßen Runderneuerungsvorrichtung ein vollständiges Ausfüllen von Löchern bewirken, bei normaler manueller Vorbereitung, d.h. Ausschleifen der Schadstellen. Begünstigt wird dies durch die geeignete Wahl der Temperatur des Bindegummis, wobei bei der niedrigeren Temperatur die Haftung des Bindegummis an dem Reifen ausreichend stark ist, daß eine Bindegummischicht gegen den Anpreßdruck des erfindungsgemäßen Formschuhs von der Karkassenoberfläche mitgenommen wird. Durch das starke Andrücken wird das Ausbilden von Lufteinschlüssen noch sicherer verhindert. Zugleich erlaubt es die abgesenkte Temperatur in dem für Bindegummi definitiv sicheren Temperaturbereich zu arbeiten, so daß die Spezifikationen der Gummihersteller wieder wie beim Kalandrieren eingehalten werden können.

Nachdem die Fehlstellen und Löcher in der Karkasse automatisch durch das erfindungsgemäße "Schmieren" mit der warmen und zähklebrig-weichen Bindegummimasse ausgefüllt werden, ist ein manuelles Ausfüllen, auch mittels kleiner Reparaturextruder, vollständig entbehrlich.

Besonders günstig ist es insofern, daß aufgrund des aufgebrachten Drucks das Eindringen der Bindegummimasse in die Rauhnarbe sichergestellt ist. Es ist lediglich erforderlich, daß die Rauhnarbe frisch und sauber ist, womit das Aufsprühen von Gummilösung für die Konfektionshaftung überflüssig wird und somit die Umweltverschmutzung vermieden werden kann und üblicherweise ein vollständiger Arbeitsplatz eingespart werden kann.

Nachdem die Bindegummischicht aufgrund des vorliegenden Bindegummiüberschusses, etwa in Form einer "Walze", die von dem sich drehenden Reifen gerollt wird, sicher in Löcher eindringt, ist es möglich, die manuelle Spachtelfüllung, die hinsichtlich der Qualitätssicherung immer arbeitsintensiv und qualitätskritisch war, vollständig wegzulassen.

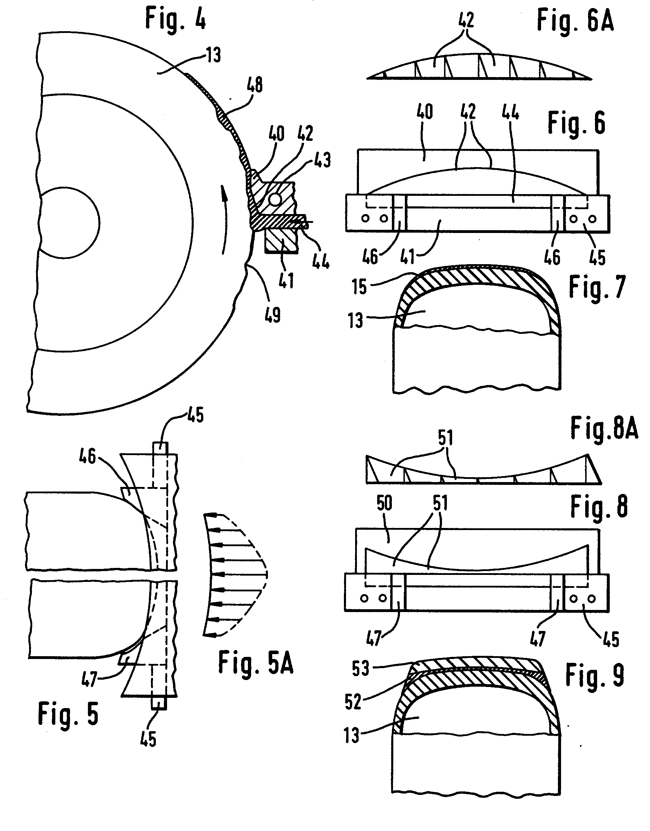

Die Erfindung läßt sich grundsätzlich nicht nur beim Runderneuern mittels vorvulkanisierter Laufstreifen einsetzen, wo Bindegummi, das teurer als Laufstreifengummi ist, in einer so dünnen Schicht wie möglich aufgebracht wird, sondern auch für das Runderneuern mittels einer Vulkanisierform, wo das Basisgummi, insbesondere für Lastwagenreifen, preiswerter als Laufstreifengummi sein kann. Dieses kann dann so aufgebracht werden, daß es in der Mitte der Karkasse dünner ist und seine Stärke zu den Schultern hin aufbaut, um einen größeren Anteil des für das Runderneuern aufzubringenden Gummis auszubilden, als Basis für einen Reifen, wie er in Fig. 9 dargestellt ist. Dieses führt zu Kosten- und Qualitätsvorteilen.

Besonders günstig ist es, wenn ein Extrusionsmundstück zwei Lippen aufweist, die einstellbar mindestens die Breite der Karkasse abdecken und mindestens um ein Vielfaches der mittleren Stärke der Bindegummischicht voneinander entfernt sind. Hierdurch wird der Extruder günstigerweise mit einem niedrigen Düsenwiderstand betrieben, was eine Extrusionstemperatur wenig oberhalb der beim Kalandrieren für die bekannte Bindegummifolie erlaubt.

Darüberhinaus ist die Lippe, die - definiert durch die Drehung der Karkasse - stromab der beabsichtigten Bindegummiströmung liegt, gegenüber der anderen Lippe um einen Betrag hervorragend, der die mittlere Stärke der aufzubringenden Bindegummischicht um ein Mehrfaches übersteigt, und ist als Formschuh oder Aufbringschuh ausgebildet, der an der Karkassenoberfläche anliegt.

Besonders günstig ist es, wenn der Formschuh eine Krümmung aufweist, die nicht notwendigerweise vollständig kreisförmig sein muß, jedoch in Teilen einen Radius aufweist, der mindestens so groß wie der größte Rauhradius eines beliebigen rundzuerneuernden Reifens ist bis zu dem Extremfall mit dem Radius = unendlich, also einer Geraden, so daß unter einem starken Anpreßdruck des Extruders die Karkasse in Übereinstimmung mit dieser Krümmung verformt werden kann. Bei unendlichem Radius ergibt sich dementsprechend eine plane Vorderfläche des Formschuhs.

Gemäß einer weiteren bevorzugten Ausgestaltung weist der Formschuh eine Fase auf, die eine Tiefe hat, die sich entlang dieser Krümmung ändert.

Im Betrieb wird dadurch das Bindegummi in eine Anhäufung benachbart diesem Formschuh oder Aufbringschuh extrudiert und hydrodynamisch in die Fase zwischen dem Aufbringschuh und der sich drehenden Karkasse mitgenommen und in den Spalt hereingezogen. Die Anhäufung wirkt somit in der Weise einer "Rollbank" eines Walzwerks oder eines Kalanders, aus welcher "Rollbank" oder "Walze" Bindegummi mit dem Anpreßdruck des Extruders in die Rauhnarbe der Karkassenoberfläche und in dort vorliegende Löcher eingedrückt wird. Der starke Anpreßdruck des Extruders drückt die Karkassenoberfläche in eine Übereinstimmung mit der Krümmung des Aufbringschuhs, was die Notwendigkeit des Austauschens von Extrusionsmundstücken für unterschiedliche Rauhradien der Karkassen überflüssig macht.

Eine Fase, die in der Mitte tief ist und die sich nahezu auf Null zu den Flanken hin reduziert, erzeugt den größten Druck in dem in der Mitte fließenden Bindegummi, um einer Druckspitze in dem Auftragschuh entgegenzuwirken, der die Karkassenoberfläche gegen die Steifheit des Stahlgürtels dort verformt. Dies erzeugt bei richtiger Wahl der Abmessungen das überraschende Ergebnis, daß sich eine im wesentlichen gleiche Stärke des Bindegummis über die Karkassenoberfläche einstellt, wie es für das Runderneuerns mittels vorvulkanisierter Laufstreifen erforderlich ist.

Hierzu entgegengesetzt erzeugt eine Fase, die in der Mitte flach ist und zu den Schultern hin tiefer wird, gleichfalls ein überraschendes Ergebnis, indem die Stärke des Bindegummis zu den Schultern größer wird, wie es erforderlich sein kann für das "Basisgummi" beim Vulkanisieren in Formen.

Der Winkel der Fase gegenüber der Karkassenoberfläche läßt sich in weiten Bereichen an die Erfordernisse anpassen. Bei einer bevorzugten Ausführungsform beträgt er beispielsweise 15 °, aber auch erheblich steilere und erheblich flachere Winkel oder auch Aus- oder Abrundungen sind gewünschtenfalls möglich. Die Länge der Fase gegenüber der gesamten Höhe des Formschuhs - in tangentialer Richtung der Karkasse betrachtet - kann beispielsweise zwei Drittel betragen, wobei aber auch hier erhebliche Variationen möglich sind. Auch das Vorsprungsmaß zwischen dem Formschuh und der gegenüberliegenden Lippe des Extruders kann beispielsweise das Zehnfache der durchschnittlichen Stärke der Bindegummischicht, aber auch hiervon erheblich abweichende Werte annehmen. Gleiches gilt für den Abstand zwischen Formschuh und gegenüberlieger Lippe, wobei dieser Abstand bevorzugt etwas geringer als das vorstehend genannte Vorsprungsmaß ist.

Die Extrusionsachse erstreckt sich bevorzugt radial, bezogen auf die Karkasse.

Gemäß einer vorteilhaften Ausgestaltung sind bewegliche Seitenstücke für die Einstellung der Breite der Extrusion an unterschiedliche Breiten der Karkassenoberflächen vorgesehen. Diese können mit unterschiedlichen Krümmungen in drei Dimensionen versehen sein, um alternative Querschnittsflächen für die Seitenränder des Bindegummis zu erzeugen, einschließlich einer leichten örtlichen Verdickung mit einer scharfen Kante, oder einem Auslaufen herab an den Flanken der Karkassen, oder Kombinationen dieser Effekte.

Der Auftragsschuh kann auch mit einem getrennten Heizelement versehen sein, das bevorzugt elektrisch betrieben wird, und dazu dient, die Temperatur des Schuhs auf eine Temperatur etwas oberhalb der Temperatur des extrudierten Bindegummis anzuheben, um ein "Bügeln" zu erleichtern. Wenn der gesamte Zyklus des Reifenaufbaus etwa mindestens drei Minuten dauert, sollte das Aufbringen des Bindegummis eine Minute oder weniger dauern, und dieses Heizelement kann so eingeschaltet werden, daß es nur während dieses Bügelns hilft, und erlaubt, daß der Formschuh zur niedrigeren Temperatur der umgebenden Metallmasse des Extrusionskopfes während des Restes des Zyklusses zurückkehrt.

Weitere Einzelheiten, Vorteile und Merkmale ergeben sich aus der nachfolgenden Beschreibung mehrerer Ausführungsbeispiele anhand der Zeichnung.

Es zeigen:
- Fig. 1: einen erfindungsgemäßen Bindegummiextruder der CTC-(Cushion-To-Casing)-Art, bei welchem das Bindegummi auf die Karkasse aufgebracht wird, der erfindungsgemäß für die Verwendung einer bereits vorhandenen Runderneuerungsanlage eines beliebigen Herstellers zusammenarbeiten kann;
- Fig. 2: eine erfindungsgemäße Ausführungsform eines Bindegummiextruders, die eine integrierte Einheit ist, die ebenfalls Laufstreifen aufbringt, wobei wiederum die CTC-Art des Extruders vorliegt und ein sogenannter Swing-Builder gemäß der nicht vorveröffentlichten DE-OS 42 03 027, auf die vollinhaltlich Bezug genommen wird, verwendet wird;
- Fig. 3: eine weitere Ausführungsform einer Rundereneuerungsvorrichtung mit einem Bindegummiextruder gemäß Fig. 1, die bei einem bekannten Laufstreifen-Extruder für das Runderneuern in einer Vulkanisierform verwendet wird;
- Fig. 4: eine schematische Schnittansicht einer Einzelheit aus Fig. 1, 2 oder 3 mit einem Teil der Reifenkarkasse, die durch den Auftragsschuh des erfindungsgemäßen Extruders ausgeflacht wird und bei welcher eine Bindegummischicht aufgebracht wird und Löcher erfindungsgemäß gefüllt werden;
- Fig. 5: eine zu Fig. 4 ähnliche Ansicht der Krümmung der Karkassenringfläche, die durch die Krümmung des Auftragsschuhs ausgeflacht wird, wobei Fig. 5A die Verteilung der radialen Kräfte bei diesem Vorgang ausweist;
- Fig. 6: eine Vorderansicht einer erfindungsgemäßen Extrusionsdüse, wobei die Fase so geformt ist, daß eine Bindegummischicht mit einer gleichmäßigen Stärke über im wesentlichen die gesamte Breite der Ringfläche der Karkasse erzeugt wird, wobei
- Fig. 7: die Wirkung auf einen Abschnitt einer Karkasse andeutet;
- Fig. 8: eine Vordersicht des erfindungsgemäßen Düsenmundstücks, wobei die Fase so geformt ist, daß sie eine Verdickung der Bindegummischicht zu den Flanken hin erzeugt;
- Fig. 9: die Wirkung auf einen Abschnitt einer Karkasse, wobei zusätzlich ein Laufstreifenrohling auf der Oberseite des Bindegummis dargestellt ist, wie es beim Reifenaufbau in der Ausführungsform gemäß Fig. 3 auftreten kann; und
- Fig.10: ein gegenüber der Darstellung gemäß Fig. 5 abgewandeltes Ausführungsbeispiel des Formschuhs.

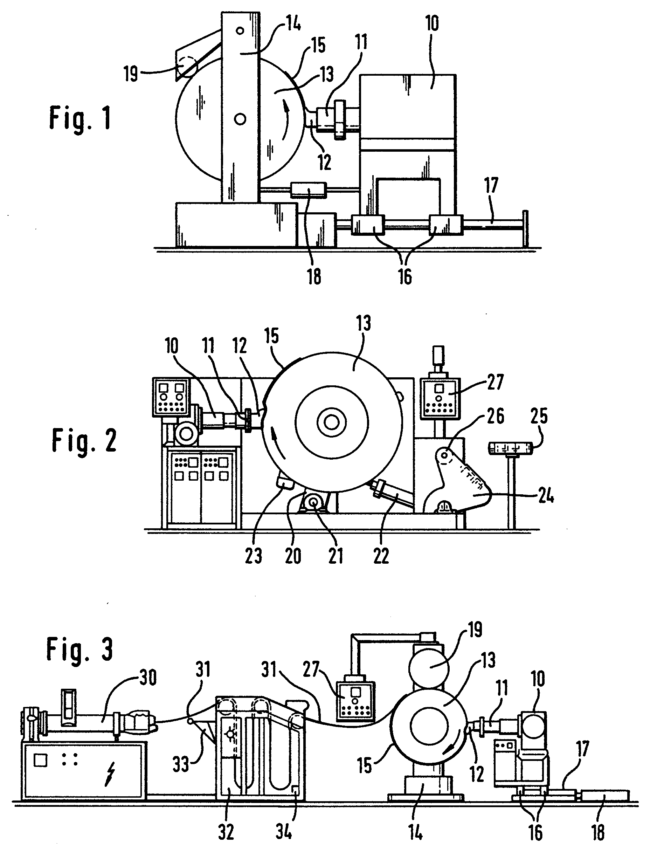

Bei der Ausgestaltung gemäß Fig. 1 ist ein Bindegummiextruder 10 mit einem Extrusionskopf 11 und einem Extrusionsmundstück 12 erfindungsgemäß versehen, das im einzelnen in Fig. 4 und den folgenden Figuren beschrieben ist. Eine Karkasse 13 ist in einer Reifenaufbauanlage 14 mit bekannter Konstruktion gelagert, wobei ein Mittenantrieb für das Drehen der Karkasse 13 vorgesehen ist. Der Extruder 10 ist gleitbeweglich in Richtungen auf die Karkasse zu und von der Karkasse weg geführt, mittels vier Kugellagerboxen 16, von denen zwei dargestellt sind und die ein leichtes Gleiten des Extruders 10 auf Schienen 17 erlauben. Ein Arbeitszylinder 18 bewegt den Extruder relativ zu der Reifenaufbauanlage 14, bevorzugt pneumatisch, was zusätzlich eine leicht einstellbare Annäherungskraft für den Auftragsschuh des Düsenmundstücks 12 für das Verformen der Karkasse 13 ermöglicht, wie es weiter unten erläutert ist.

Die Reifenaufbauanlage 14 weist darüberhinaus eine Anrollvorrichtung 19 für den vorvulkanisierten Laufstreifen auf, nachdem dieser auf die mit Bindegummi versehene Oberflächen 15 der Karkasse 13 in bekannter Weise aufgebracht ist.

Fig. 2 zeigt eine integrierte Einheit eines Bindegummiextruders 10 und einer Reifenaufbauanlage, wobei hier wie auch in den weiteren Figuren gleiche Bezugszeichen auf gleiche Teile wie in Fig. 1 hinweisen. Anstelle der Vorrichtung für die Erzeugung einer horizontalen Bewegung des Extruders 10 gegen die Karkasse 13 zeigt hier die Reifenaufbauanlage einen Schwenkarm 20, der um einen Schwenkpunkt 21 durch einen linearen Schraubenantrieb 22 verschwenkbar ist, der durch einen Elektromotor 23 betätigt wird.

Diese Anordnung erlaubt es, daß sich die Reifenkarkasse 13 in der dargestellten Position in einem Kreisbogen bewegen kann, der an die Horizontale angenähert ist, und im wesentlichen radial gegen die erfindungsgemäße Extrusionsdüse 12 gedrückt wird, wobei eine Annäherungskraft durch den Antriebsmotor 23 des Linearantriebs 22, der auf den Schwenkarm 20 wirkt, überwacht wird.

Bei Bewegungen weg von den Extruder 10 kann der Schwenkarm 20 dazu dienen, eine leichte Montage der Karkasse 13 vom Fußboden aus zu erlauben, wie auch, die Karkasse 13 in die Einheit für das Aufbringen des Laufstreifens und das Anrollen 24 zu drücken, die zu der Karkasse hin für das Führen des vorvulkanisierten Laufstreifens von dem Rolltisch 25 und für das Anbringen mindestens der Anrollkraft gegen die Karkasse mittels der Rolle 26 geschwenkt werden kann.

Diese Ausführungsform erzeugt eine besonders wirksame und schnelle Integration aller Arbeitsschritte für das Reifenaufbauen bei einem vorvulkanisierten Verfahren, wobei Einzelheiten aus der - nicht vorveröffentlichten - DE-A1-42 03 027, auf die vollinhaltlich Bezug genommen wird, ersichtlich sind.

Bei den beiden dargestellten Einheiten können die verschiedenen Bewegungen der Teile relativ zueinander wie auch die Extrusionsgeschwindigkeit durch eine Prozeß-Steuereinheit koordiniert werden, wobei verschiedene Aktionen gestartet und erforderlichenfalls durch einen Bediener über eine Steuerpanel 27 festgelegt werden können, das in Fig. 2 dargestellt ist, jedoch gleichermaßen auch in Fig. 1 anwendbar ist.

Dies betrifft besonders die Koordination der Drehung der Karkasse, der Relativbewegung und der Anlagekraft zwischen der Düse und der Karkasse und dem zeitlichen Ablauf des Startens und Anhaltens der Drehung der Karkasse und der Extruderschnecke, was im einzelnen unter Bezugnahme auf weiter unten erläuterte Figuren beschrieben wird.

Fig. 3 zeigt eine zu Fig. 1 ähnliche Ausführungsform, wobei eine Reifenaufbauanlage mit einem Laufstreifen-Extruder für die Formvulkanisierung zur Anwendung gelangt. Die Anlage weist einen Laufstreifen-Extruder 30 auf, der den extrudierten Laufstreifen-Rohling 31 einem zweischleifigen Akkumulator 32 zuführt, der durch ein Tänzer-Potentiometer in bekannter Weise gesteuert wird. Die Akkumulatorschleifensteuerung 32, die in bekannter Weise arbeitet, stoppt den Extruder, wenn die Schleifen voll sind, und startet ihn erneut, nachdem der Laufstreifen für den Reifenaufbau abgezogen ist. Jedoch wird die Geschwindigkeit des Laufstreifen-Extruders bevorzugt so eingestellt, daß sie einfach der Zunahme und der Abnahme der Schleifen ohne Unterbrechung Rechnung trägt, um eine stabile Laufstreifenextrusion zu erzeugen.

Ein einem Steuerpanel 27 benachbart stehender Bedienmann bringt die Karkasse an und montiert sie ab und führt den Laufstreifen zu, den er mit einem Messer abschneidet. Er formt den Stoß und betätigt die Anrollvorrichtung 19 in bekannter Weise.

Die Funktion des Bindegummiextruders wird wie im folgenden beschrieben automatisiert. Die Automatisierung kann auch auf die Laufstreifenanbringung, das Schneiden, die Stoßausbildung und das Anrollen ausgedehnt werden, jedoch ist die einfachste Weise der Laufstreifen-Handhabung hier dargestellt, die für die Verdeutlichung der Erfindung ausreicht. Soweit der Bindegummiextruder bei diesem und den weiteren Beispielen betroffen ist, arbeitet dieser soweit vollautomatisch, daß er in jedem Falle nicht von der im wesentlichen durch einen Mann durchzuführenden Aufbauarbeit ablenkt.

Die Fig. 4, 5 und 6 zeigen die stromab liegende Lippe des Extrusionsspritzkopfes 12 erfindungsgemäß in Anlage mit der Karkasse 13, wobei der Extrusionsspritzkopf die Form eines Auftragschuhs 40 aufweist.

Dieser Auftragsschuh 40 weist einen vertikalen Abstand zur unteren Lippe 41 auf, zwischen denen die Tiefe der Düse oder des Spritzkopfes gebildet wird, und ragt auch über die untere Lippe zu der Karkasse um einen anderen Abstand vor, welche Abstände in jedem Falle ein Mehrfaches der mittleren Stärke der Schicht 15 des aufzubringenden Bindegummis betragen.

Diese Merkmale bewirken, das der Extruder gegen einen niedrigen Düsenwiderstand mit einer Extrusionstemperatur arbeiten kann, die näher derjenigen bei dem üblichen Kalandern ist als bei bekannten Extrudern, und daß benachbart dem Auftragsschuh 40 eine Ansammlung von Gummi ausgebildet wird.

Eine Fase oder Abschrägung des Auftragsschuhs bewirkt, daß Gummi durch die Drehung des Reifens unter die Kontaktoberfläche der Anlageoberfläche gezogen wird. Darüberhinaus bewirkt die Fase, daß die Gummiansammlung wie eine Rollbank oder Walze eines Walzwerks oder eines Kalanders wirkt, aus welcher die Bindegummischicht mit einer Stärke ausgebildet wird, die durch die Größe der Rollbank und die Größe des Annäherungsdrucks des Extruders sowie den Verformungswiderstand der Karkassenoberfläche festgelegt wird.

Die Größe der Bindegummiwalze legt andererseits fest, welche Größe von Löchern zuverlässig aufgefüllt werden kann, bezogen auf den Anpreßdruck des Extruders, um ein Eindringen in die Tiefe sicherzustellen, und eine größere Bindegummiwalze kann eine Gruppe von Löchern, die zusammen auftreten, auffüllen, ohne die dazwischenliegende dünne Bindegummischicht zu unterbrechen.

Ein elektrisches Heizelement 43 kann für das Aufwärmen des Auftragsschuhs auf eine Temperatur oberhalb derjenigen der Gummimasse vorgesehen sein. Das Heizelement 43 kann eingeschaltet werden, so daß es nur während der Bindegummi-Auftragszeit, der beispielsweise ein Viertel des gesamten Reifenaufbauzyklusses beträgt, eingeschaltet ist, wobei es möglich wird, daß der Schuh nahezu sofort zu der Temperatur der umgebenden Metallmasse während des Restes des Aufbauzyklusses zurückkehrt. In Fig. 4 sind bei 48 ausgefüllte und bei 49 noch offene Löcher in der Karkassenoberfläche dargestellt.

Fig. 5 gibt eine Vorstellung der Verformung der Karkasse, wobei Fig. 5A ein Muster der Druckänderung über die Karkassenbreite infolge des sich ändernden Widerstands bei der Verformung des Stahlgürtels der Karkasse wiedergibt.

Fig. 5 und 6 zeigen auch Seitenstücke 45, die gleitbeweglich durch eine geeignete Vorrichtung, die nicht dargestellt ist, einstellbar sind, um unterschiedliche Breiten der Oberfläche der Karkassen bearbeiten zu können.

Fig. 5 zeigt zwei Arten derartiger Seitenstücke, die sich durch unterschiedliche nach vorne weisende Vorsprünge unterscheiden: der Vorsprung 46, der auch aus Fig. 6 ersichtlich ist, ist so ausgelegt, daß er die Breite des Bindegummis exakt bis zur Breite der Karkassenringfläche begrenzt. Der Vorsprung 47 erlaubt die Ansammlung von Gummi, so daß es eine gewisse Länge die Flanke der Karkasse herunterreicht, um auch dort eine Abdeckung mit Bindegummi zu erzeugen.

Fig. 6 zeigt den Auftragsschuh oder Formschuh 40, wobei die Fase 42 in der Mitte tiefer und zu den Flanken hin flacher ist, wie es diagrammartig in Fig. 6A dargestellt ist.

Fig. 7 zeigt einen Abschnitt einer Karkasse 13, der mit einer dünnen und im wesentlichen einheitlichen Bindegummischicht durch den wie in Fig. 6 mit den Seitenstücken 46 gefasten Schuh hergestellt ist.

Fig. 8 zeigt einen Auftragsschuh 50 mit einer Fase 51, die in der Mitte flacher ist und zu den Flanken hin tiefer wird, wie es diagrammartig in Fig. 8A dargestellt ist.

Fig. 9 zeigt die Bindegummischicht 52, die sich hieraus ergibt und die zu den Flanken hin dicker wird. Ebenfalls unter Verwendung eines Seitenstücks 47 reicht das Bindegummi eine gewisse Strecke die Flanken der Karkasse herunter. Der entsprechende Laufstreifenrohling 53 ist ersichtlich, wie er sich nach einem vollständigen Reifenaufbauen gemäß der Ausführungsform in Fig. 3 ergeben würde.

Bei einem bevorzugten Betrieb der erfindungsgemäßen Runderneuerungsvorrichtung wird die Drehung der Karkasse einen vorgegebenen kleinen Zeitabschnitt vor der Aktivierung des Extruders gestartet, so daß die Stärke des Bindegummis sich von einem dünnen Film, der gerade die Rauhigkeiten auf der Karkassenoberfläche abdeckt, aufbaut, bis der Extruder seine voreingestellte Geschwindigkeit erreicht hat. Wenn die Karkasse im wesentlichen eine volle Drehung gemacht hat, wird die Extrudergeschwindigkeit über im wesentlichen die gleiche Strecke auf Null reduziert, wie sie verwendet wurde, um die volle Stärke der Bindegummischicht aufzubauen. Über diese Strecke wird die Bindegummiwalze auf Null reduziert, wodurch ein glatter "Stoss" erzeugt wird. In dieser Weise entsteht kein Abfall und beim nächsten Reifen kann mit einer frisch ausgebildeten Bindegummiwalze gearbeitet werden.

Da - wie erwähnt - die Größe der Bindegummiwalze oder Rollbank und der Anpreßdruck des Extruders festlegen, welche Löchergröße ausgefüllt werden kann, kann als überraschendes Ergebnis festgehalten werden, daß das Löcherausfüllen durch die erfindungsgemäße Vorrichtung zuverlässiger ist als wenn ein Bedienmann es durchführt, der immer besondere Sorgfalt und Aufmerksamkeit für diese Aufgabe ausüben müßte. Diese Wirkung kann durch Bindegummimaterial unterstützt werden, das besonders für diesen Zweck und auch für den Zweck des Anhaftens ohne das Aufsprühen von Gummilösung ausgebildet ist, obwohl gute Ergebnisse bereits bei Verwendung von normalen, derzeit verfügbaren Bindegummimaterialien erreicht wurden.

Hinsichtlich der Extrusionstemperatur besteht ein direkter Vergleich mit der eingangs genannten US-Patent 5 162 070: um eine Bindegummi-Gummierungszeit von einer Minute für eine Lastwagenreifen der Größe 12-R-22,5 zu erreichen, mußte eine Extruder-Geschwindigkeit von 100 U/min gegen den Düsenwiderstand eines Schlitzes von 0,4 mm Breite verwendet werden, was zu einer Bindegummischicht von 1 mm Stärke bei einer Extrusiontemperatur von etwa 90 °C führte.

Mit einer erfindungsgemäßen Extrusionsdüse mit einer Schlitzbreite von 2,8 mm mußte der Extruder nur mit 40 U/min betrieben werden und ergab eine Temperatur des Extrudats von 80 °C.

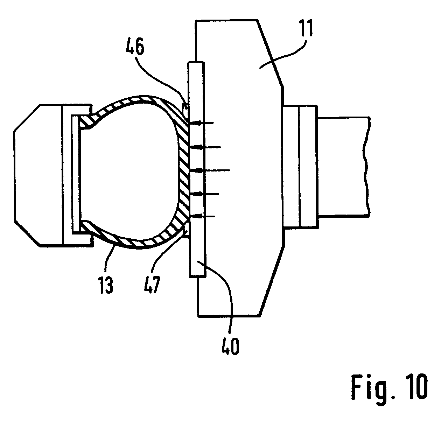

Die in Fig. 10 dargestellte Ausgestaltung des Formschuhs 40 zeigt einen Formschuh mit gerader Bügelkante. Der Krümmungsradius des Formschuhs 40 ist bei dieser Ausgestaltung insofern gleich unendlich. Der Formschuh drückt beim Auftragen der Bindegummischicht die Karkasse so ein, daß eine flache Anlage über die gesamte Breite der Karakasse entsteht, obwohl die Karkasse in Querrichtung betrachtet leicht gewölbt ist. Die Druckverteilung entspricht insofern der in Fig. 5 A verteilten, wobei jedoch der mittlere Bereich stärker betont ist.

Besonders günstig ist es, daß die gerauhte Karkassenoberfläche für die sich bildende Gummiwalze wie eine Art Feststofförderpumpe wirkt, die trotz des hohen Anpressdrucks an dem Formschuh 40 eine Gummischicht mitnimmt. Es werden alle Reparaturlöcher gefüllt, wobei die Befüllung verläßlicher erfolgt, als bei manueller Reparatur mit einem Handextruder. Aufgrund des erheblichen aufgebrachten Drucks werden auch alle feinen Riefen, Furchen und sonstigen Unebenheiten der Karkasse gleichmäßig befüllt, was auch der verbesserten Verankerung der Bindegummischicht in der Karkasse dient, und auch bereits die Entlüftung, die ansonsten beim Autoklavieren stattfinden muß, vorbereitet.

Die Dicke der Bindegummischicht kann in dem gewünschten Maße an die Erfordernisse angepaßt werden, wobei die Anpassung der Gleichmäßigkeit der Bindegummischicht über die Breite des Reifens durch die unterschiedlichen möglichen Formgebungen des Formschuhs ohne weiteres möglich ist.

Besonders günstig ist es ferner, daß ein Stoß bei der Aufbringung der Bindegummischicht praktisch nicht entsteht. Indem man gleichzeitig mit dem Beginn der Extrusion die Rotation der Karkasse einleitet, baut sich die Bindegummiwalze erst langsam auf, so daß die Bindegummischicht auch erst langsam bis zur voreingestellten Dicke zunimmt. Beim entsprechenden Abschalten des Extruders rechtzeitig vor dem Erreichen der Zieldicke erreicht man eine Art Überlappung zwischen Anfang und Ende der Bindegummischicht, nachdem sich die Bindegummiwalze dann mit dem Ende der Umdrehung gleichmäßig abbaut. Durch ein entsprechendes Nachlaufen und Weglassen der Karkasse wird dann der Stoß vollständig weggeschmiert.

Ein weiterer besonderer Vorteil liegt darin begründet, daß durch den starken aufgebrachten Druck das zusätzliche Einsprühen der Karkasse mit Gummilösung überflüssig wird, wenn die Belegung innerhalb weniger Stunden nach der Rauhung der Karkasse erfolgt. Dies ist aus verschiedenen Gründen bevorzugt.

Es ist auch ohne weiteres möglich, Laufstreifen mit sogenannten Wings zu belegen, indem in an sich bekannter Weise eine Bindegummiplatte von etwa 100 mm Breite von Hand angelegt wird. Ebenso ist dies für Laufstreifen mit bombierter Unterfläche, sogenannten Konturlaufstreifen, möglich, die in ganz kurzen Wings auslaufen, wobei eine weitere Möglichkeit für derartige Laufstreifen darin besteht, Seitenteile 46, 47 entsprechend auszubilden, so daß bis zu einer Tiefe von 30 mm die Flanken herunter ein Aufschmieren zuverlässig erfolgt.

## Patentansprüche

1. Runderneuerungsvorrichtung für Reifen, bei welcher ein Laufstreifen auf eine Karkasse belegbar ist, mit einer Laufstreifen-Zuführvorrichtung für die Zuführung des Laufstreifens zu der Karkasse und mit einem Extruder für die Extrusion einer Bindegummischicht, der zwei eine Extrusionsdüse begrenzende Lippen aufweist, von denen die in Bewegungsrichtung der Karkasse hintere Lippe gegenüber der anderen Lippe zur Karkasse hin vorspringt, dadurch gekennzeichnet, daß die der Karkasse (13) nähere Lippe als Formschuh (40) ausgebildet ist und unter die Karkasse (13) verformender Vorspannung an diese angedrückt ist.

2. Runderneuerungsvorrichtung nach Anspruch 1, dadurch gekennzeichnet, daß der Formschuh (40) eine Abschrägung oder Fase (42) aufweist, die sich in einem Winkel von 2° bis 50°, bevorzugt zwischen 10° und 30°, zur Karkassenoberfläche erstreckt.

3. Runderneuerungsvorrichtung nach einem der vorhergehenden Ansprüche, dadurch gekennzeichnet, daß der Formschuh (40) gegenüber der anderen Lippe (41) des Extruders (10) um das drei- bis fünfzehnfache, insbesondere etwa das zehnfache der Stärke der Bindegummischicht (15) vorspringt.

4. Runderneuerungsvorrichtung nach einem der vorhergehenden Ansprüche, dadurch gekennzeichnet, daß zwischen dem Formschuh (40) und der Lippe (41) eine lichte Weite besteht, die die Stärke der Bindegummischicht (15) um das zwei- bis zwölffache, insbesondere etwa das achtfache übertrifft.

5. Runderneuerungsvorrichtung nach einem der vorhergehenden Ansprüche, dadurch gekennzeichnet, daß der Formschuh (40) einen Krümmungsradius aufweist, der gleich oder größer als der größte Radius der Karkassenoberfläche ist oder über seine ganze Breite im wesentlichen gerade ist.

6. Runderneuerungsvorrichtung nach einem der vorhergehenden Ansprüche, dadurch gekennzeichnet, daß der Extruder (10) das Bindegummi lediglich auf eine Temperatur aufheizt, die im Bereich der Kalandriertemperatur von beispielsweise etwas weniger als 80 °C ist oder dieser entspricht, oder etwas höher ist, wobei bei einer Extrudertemperatur von etwa 85° C ein Alarmsensor für einen Grenzwert von etwa 90°C vorgesehen ist.

7. Runderneuerungsvorrichtung nach einem der vorhergehenden Ansprüche, dadurch gekennzeichnet, daß das Düsenmundstück des Extruders (40, 41) über die Breite der Karkasse (13) betrachtet eine sich ändernde Fase (42) aufweist, wobei insbesondere der Formschuh (40) im Düsenmundstück positiv oder negativ gekrümmt ist, so daß die Fase (42) in der Reifenmitte oder an den Reifenflanken am größten ist.

8. Runderneuerungsvorrichtung nach einem der vorhergehenden Ansprüche, dadurch gekennzeichnet, daß das Bindegummi eine solche Haftung auf der Karkasse (13) und eine solche Viskosität aufweist, daß es gegen den Anpreßdruck des Formschuhs (40) in einen durch die Bindegummischicht (15) erzeugten Spalt zwischen Karkasse (13) und Formschuh (40) mitgenommen wird.

9. Runderneuerungsvorrichtung nach einem der vorhergehenden Ansprüche, dadurch gekennzeichnet, daß die Zufuhr des Bindegummis durch den Extruder (10) elektronisch geregelt wird, wobei als Indikator eine sich auf der gegenüberliegenden Seite des Formschuhs (40) bildende Bindegummiwalze verwendet wird, die durch Zufuhr von neuem Bindegummi stets so groß gehalten wird, daß etwaige Vertiefungen und Verletzungen der Karkassenoberfläche stets vollständig gefüllt werden können.

10. Runderneuerungsvorrichtung nach einem der vorhergehenden Ansprüche, dadurch gekennzeichnet, daß im Bereich des Düsenmundstücks des Extruders (10) zusätzlich der Formschuh (40) mit einer während des Aufbringens der Bindegummischicht (15) kurzfristig wirkenden Heizung (43) beheizbar ist.

11. Runderneuerungsvorrichtung nach einem der vorhergehenden Ansprüche, dadurch gekennzeichnet, daß insbesondere beheizte Seitenflanken-Formstücke (46, 47) sich seitlich an den insbesondere unbeheizten Formschuh (40) anschließen, wobei der Abstand der Formstücke in Anpassung an unterschiedliche Karkassenbreiten über eine Einstellvorrichtung (45) einstellbar ist und die Seitenflanken-Formstücke entsprechend der Ausgestaltung des Formschuhs (40) eine Bindegummiwalze führen.

12. Verfahren für das Runderneuern eines Reifens, bei welchem über einen Extruder (10), der zwei, eine Extrusionsdüse begrenzende Lippen aufweist, Bindegummi auf eine Karkasse (13) aufgebracht wird, dadurch gekennzeichnet, daß die in Bewegungsrichtung hintere Lippe als Formschuh (40) ausgebildet ist und der Formschuh (40) des Düsenmundstücks des Extruders (10) an die Karkasse so stark angedrückt wird, daß der Krümmungsradius der Karkasse (13) an den Formschuh (40) angepaßt wird und etwaige Vertiefungen in der Karkasse (13) über einen freien Überschuß von Bindegummi ausfüllbar sind.

13. Verfahren nach Anspruch 12, dadurch gekennzeichnet, daß der Extruder (10) das Bindegummi lediglich auf eine Temperatur aufheizt, die im Bereich der Kalandriertemperatur von beispielsweise etwas weniger als 80°C ist oder dieser entspricht oder etwas höher ist, wobei bei einer Extrudertemperatur von etwa 85°C für einen Grenzwert von 90°C ein Alarm abgegeben wird.

14. Verfahren nach Anspruch 12 oder 13, dadurch gekennzeichnet, daß das Bindegummi eine solche Haftung auf der Karkasse (13) und eine solche Viskosität aufweist, daß es gegen den Anpreßdruck des Formschuhs (40) in einen durch die Bindegummischicht (15) erzeugten Spalt zwischen Karkasse (13) und Formschuh (40) mitgenommen wird.

15. Verfahren nach einem der Ansprüche 12 bis 14, dadurch gekennzeichnet, daß die Zufuhr des Bindegummis durch den Extruder (10) elektronisch geregelt wird, wobei als Indikator eine sich auf der gegenüberliegenden Seite des Formschuhs (40) bildende Bindegummiwalze verwendet wird, die durch Zufuhr von neuem Bindegummi stets so groß gehalten wird, daß etwaige Vertiefungen und Verletzungen der Karkasenoberfläche stets vollständig gefüllt werden können.

16. Verfahren nach einem der Ansprüche 12 bis 15, dadurch gekennzeichnet, daß zunächst die Drehung der Karkasse (13) knapp vor der Aktivierung des Extruders (10) eingeleitet wird und dann die Bindegummischicht (15) von einer dünnen Schicht, die die Rauhigkeit der Karkassenoberfläche gerade abdeckt, aufgebaut wird, und daß die Extrusionsgeschwindigkeit nach einer vollen Umdrehung der Karkasse (13) vermindert wird, so daß der Bindegummiüberschuß sich bei Fertigstellen der Bindegummischicht (15) auf Null reduziert.

## Claims

1. A retreading apparatus for tyres, in which a tread strip can be applied to a carcass, having a tread-feeding device for feeding the tread to the carcass and having an extruder for extruding a cushion gum layer, which extruder has two lips defining an extrusion die, the rear lip of which in the direction of movement of the carcass projects towards the carcass in relation to the other lip, characterised in that the lip nearer to the carcass (13) is in the form of an applicator shoe (40) and is pressed against the carcass (13) under preloading which deforms said carcass.

2. A retreading apparatus according to Claim 1, characterised in that the applicator shoe (40) has a chamfer or bevel (42) which extends towards the carcass surface at an angle of 2° to 50°, preferably between 10° and 30°.

3. A retreading apparatus according to any one of the preceding Claims, characterised in that the applicator shoe (40) projects by three to fifteen times, in particular approximately ten times, the thickness of the cushion gum layer (15) in relation to the other lip (41) of the extruder (10).

4. A retreading apparatus according to any one of the preceding Claims, characterised in that between the applicator shoe (40) and the lip (41) a clear width is provided which exceeds the thickness of the cushion gum layer (15) by two to twelve times, in particular approximately eight times.

5. A retreading apparatus according to any one of the preceding Claims, characterised in that the applicator shoe (40) has a radius of curvature which is equal to or greater than the maximum radius of the carcass surface or is substantially straight over its entire width.

6. A retreading apparatus according to any one of the preceding Claims, characterised in that the extruder (10) heats the cushion gum only to a temperature which is within the range of the calendering temperature of, for example, slightly less than 80°C or corresponds thereto or is slightly higher, wherein at an extruder temperature of approximately 85°C an alarm sensor is provided for a limit value of approximately 90°C.

7. A retreading apparatus according to any one of the preceding Claims, characterised in that, viewed over the width of the carcass, the die orifice of the extruder (40,41) is of varying chamfer (42), wherein in particular the applicator shoe (40) has a positive or negative curvature in the die orifice so that the chamfer (42) is greatest at the tyre centre or on the tyre flanks.

8. A retreading apparatus according to any one of the preceding Claims, characterised in that the cushion gum has an adhesion to the carcass (13) and a viscosity such that it is conveyed counter the pressing force of the applicator shoe (40) into a gap formed by the cushion gum layer (15) between the carcass (13) and the applicator shoe (40).

9. A retreading apparatus according to any one of the preceding Claims, characterised in that the supply of the cushion gum through the extruder (10) is electronically controlled, wherein a cushion gum roll being formed on the opposite side of the applicator shoe (40) is used as an indicator and is always maintained by the supply of new cushion gum at a level such that any depressions and damage to the carcass surface can always be completely filled.

10. A retreading apparatus according to any one of the preceding Claims, characterised in that in the vicinity of the die orifice of the extruder (10) the applicator shoe (40) can additionally be heated with a heating element (43) acting briefly during the application of the cushion gum layer (15).

11. A retreading apparatus according to any one of the preceding Claims, characterised in that in particular heated side flank forming members (46,47) laterally adjoin the in particular unheated applicator shoe (40), wherein the distance apart of the forming members can be adjusted via an adjusting means to conform to different carcass widths and the side flank forming members guide a cushion gum roll according to the configuration of the applicator shoe (40).

12. A method of retreading a tyre, in which cushion gum is applied to a carcass (13) via an extruder which has two lips defining an extrusion die, characterised in that the rear lip in the direction of movement is in the form of an applicator shoe (40) and the applicator shoe (40) of the die orifice of the extruder (10) is pressed so strongly against the carcass that the radius of curvature of the carcass (13) is adapted to the applicator shoe (40) and any depressions in the carcass (13) can be filled with a free excess of cushion gum.

13. A method according to Claim 12, characterised in that the extruder (10) heats the cushion gum only to a temperature which is within the range of the calendering temperature of, for example, slightly less than 80°C or corresponds thereto or is slightly higher, an alarm being given at an extruder temperature of approximately 85°C for a limit value of approximately 90°C.

14. A method according to Claim 12 or 13, characterised in that the cushion gum has an adhesion to the carcass (13) and a viscosity such that it is conveyed counter the pressing force of the applicator shoe (40) into a gap formed by the cushion gum layer (15) between the carcass (13) and the applicator shoe (40).

15. A method according to any one of Claims 12 to 14, characterised in that the supply of the cushion gum through the extruder (10) is electronically controlled, wherein a cushion gum roll being formed on the opposite side of the applicator shoe (40) is used an indicator and is always maintained by the supply of new cushion gum at a level such that any depressions and damage to the carcass surface can always be completely filled.

16. A method according to any one of Claims 12 to 15, characterised in that initially the rotation of the carcass (13) is commenced just before the activation of the extruder (10) and then the cushion gum layer (15) is built up from a thin layer which just covers the roughness of the carcass surface, and in that the extrusion rate is decreased after one complete revolution of the carcass (13) so that the cushion gum excess is reduced to zero upon completion of the cushion gum layer (15).

## Revendications

1. Dispositif de rechapage des pneus, dans lequel il est possible de déposer une bande de roulement sur une carcasse et qui comprend un dispositif d'admission de la bande de roulement, pour amener la bande de roulement vers la carcasse, et une extrudeuse destinée à l'extrusion d'une couche de caoutchouc de liaison, laquelle extrudeuse est munie d'une filière d'extrudeuse délimitée par deux lèvres, dont la lèvre arrière dans le sens de rotation de la carcasse s'avance en saillie vers la carcasse par rapport à l'autre lèvre, caractérisé en ce que la lèvre la plus rapprochée de la carcasse (13) est conçue comme un patin de formage (40) et s'appuie contre la carcasse (13) sous l'effet de la précontrainte déformant cette dernière.

2. Dispositif de rechapage des pneus selon la revendication 1, caractérisé en ce que le patin de formage (40) présente un bord taillé en biseau ou en chanfrein (42), qui forme avec la surface de la carcasse un angle compris entre 2° et 50°, de préférence entre 10° et 30°.

3. Dispositif de rechapage des pneus selon l'une quelconque des revendications précédentes, caractérisé en ce que la saillie du patin de formage (40) par rapport à l'autre lèvre (41) de l'extrudeuse (10) est trois à quinze fois, en particulier dix fois environ, supérieure à l'épaisseur de la couche de caoutchouc de liaison (15).

4. Dispositif de rechapage des pneus selon l'une quelconque des revendications précédentes, caractérisé en ce que le patin de formage (40) et la lèvre (41) sont séparés par une distance intérieure deux à douze fois, en particulier huit fois environ, supérieure à l'épaisseur de la couche de caoutchouc de liaison (15).

5. Dispositif de rechapage des pneus selon l'une quelconque des revendications précédentes, caractérisé en ce que le patin de formage (40) présente un rayon de courbure identique ou supérieur au rayon maximal de la surface de la carcasse ou est sensiblement droit sur toute sa largeur.

6. Dispositif de rechapage des pneus, selon l'une quelconque des revendications précédentes, caractérisé en ce que l'extrudeuse chauffe le caoutchouc de liaison seulement à une température qui est légèrement inférieure à 80 °C, domaine de la température de calandrage, ou identique à celle-ci ou légèrement supérieure, un capteur de température, réglé à une valeur limite de 90 °C, étant prévu pour émettre un signal lorsque la température d'extrusion atteint 85 °C environ.

7. Dispositif de rechapage des pneus, selon l'une quelconque des revendications précédentes, caractérisé en ce que la filière d'extrudeuse (40, 41) présente un chanfrein (42) de dimension variable considéré dans le sens de la largeur de la carcasse (13), en particulier le patin de formage (40) de la filière présentant une courbure positive ou négative, de telle sorte que le chanfrein (42) présente sa dimension maximale au milieu du pneu ou sur les flancs du pneu.

8. Dispositif de rechapage des pneus, selon l'une quelconque des revendications précédentes, caractérisé en ce que le caoutchouc de liaison présente une adhérence sur la carcasse (13) et une viscosité telles qu'il puisse être entraîné, face à la pression appliquée par le patin de formage (40), dans une fente formée par la couche de caoutchouc de liaison entre la carcasse (13) et le patin de formage (40).

9. Dispositif de rechapage des pneus, selon l'une quelconque des revendications précédentes, caractérisé en ce que l'admission du caoutchouc de liaison dans l'extrudeuse (10) est commandée par un dispositif électronique, l'indicateur utilisé étant un cylindre de caoutchouc de liaison se formant sur le côté face au patin de formage (40), qui, par l'admission de nouveau caoutchouc de liaison, est maintenu en permanence à une taille permettant de remplir toujours intégralement les éventuels cavités et endommagements de la surface de la carcasse.

10. Dispositif de rechapage des pneus, selon l'une quelconque des revendications précédentes, caractérisé en ce que, dans la zone de la filière de l'extrudeuse (10), il est possible de chauffer en plus le patin de formage (40) à l'aide d'un élément de chauffage (43) qui agit pendant un court moment lors de l'application de la couche de caoutchouc de liaison (15).

11. Dispositif de rechapage des pneus, selon l'une quelconque des revendications précédentes, caractérisé en ce que des organes de formage latéraux (46, 47), en particulier chauffés, sont montés contre les côtés latéraux du patin de formage (40), en particulier non chauffé, la distance entre les organes de formage pouvant être ajustée par un dispositif de réglage (45) en fonction de la largeur de la carcasse, et les organes de formage latéraux guident un cylindre de caoutchouc de liaison conforme à la forme du patin de formage (40).

12. Procédé de rechapage des pneus, dans lequel une extrudeuse (10), munie d'une filière délimitée par deux lèvres, permet de déposer du caoutchouc de liaison sur une carcasse (13), caractérisé en ce que la lèvre arrière, considérée dans le sens de rotation, est conçue comme un patin de formage (40) et le patin de formage (40) de la filière de l'extrudeuse (10) est appuyé contre la carcasse avec une force telle que le rayon de courbure de la carcasse (13) coïncide avec le patin de formage et les éventuelles cavités dans la carcasse (13) peuvent être remplies par un excédent libre de caoutchouc de liaison.

13. Procédé selon la revendication 12, caractérisé en ce que l'extrudeuse (10) chauffe le caoutchouc de liaison seulement à une température qui est légèrement inférieure à 80 °C, domaine de la température de calandrage, ou identique à celle-ci ou légèrement supérieure, un signal étant émis lorsque la température d'extrusion atteint 85 °C environ pour une valeur limite de 90 °C.

14. Procédé selon la revendication 12 ou 13, caractérisé en ce que le caoutchouc de liaison présente une adhérence sur la carcasse (13) et une viscosité telles qu'il puisse être entraîné, face à la pression appliquée par le patin de formage (40), dans une fente formée par la couche de caoutchouc de liaison (15) entre la carcasse (13) et le patin de formage (40).

15. Procédé selon l'une quelconque des revendications 12 à 14, caractérisé en ce que l'admission du caoutchouc de liaison dans l'extrudeuse (10) est commandée par un dispositif électronique, l'indicateur utilisé étant un cylindre de caoutchouc de liaison se formant sur le côté face au patin de formage (40), qui, par l'admission de nouveau caoutchouc de liaison, est maintenu en permanence a une taille permettant de remplir toujours intégralement les éventuels cavités et endommagements de la surface de la carcasse.

16. Procédé selon l'une quelconque des revendications 12 à 15, caractérisé en ce que la carcasse (13) commence a tourner d'abord un court instant avant le démarrage de l'extrudeuse (10) et ensuite la couche de caoutchouc de liaison (15) est constituée en partant d'une mince couche, qui couvre juste la rugosité de la surface de la carcasse, et en ce que la vitesse d'extrusion est abaissée après une rotation complète de la carcasse (13), de manière à réduire à zéro l'excédent de caoutchouc de liaison apparaissant sur les zones finies de la couche de caoutchouc de liaison (15).
